# EUROPEAN PATENT SPECIFICATION

(11) **EP 3 401 425 B1**
(45) Date of publication and mention of the grant of the patent: **22.03.2023**
(21) Application number: 17894668.7
(22) Date of filing: 19.06.2017
(51) Int. Cl.: D02G 3/18, D01H 15/00, B65H 69/00, C03C 27/00, C03C 27/10

(54) **GLASS FIBER BUNDLE KNOTTING METHOD AND SPLICED GLASS FIBER BUNDLE**
VERFAHREN ZUM KNOTEN VON GLASFASERBÜNDELN UND GESPLEISSTES GLASFASERBÜNDEL
PROCÉDÉ DE NOUAGE DE FAISCEAU DE FIBRES DE VERRE ET FAISCEAU DE FIBRES DE VERRE ÉPISSÉES

(30) Priority: 09.02.2017 CN 201710071461
(43) Date of publication of application: 14.11.2018
(73) Proprietor: Jushi Group Co., Ltd., Tongxiang, Zhejiang 314500 (CN)
(72) Inventor: SHAO, Jiansong, Tongxiang Zhejiang 314500 (CN); PENG, Haijian, Tongxiang Zhejiang 314500 (CN)
(74) Representative: dompatent von Kreisler Selting Werner - Partnerschaft von Patent- und Rechtsanwälten mbB
(86) International application number: PCT/CN2017/088993
(87) International publication number: WO 2018/145384

(56) References cited:
- EP-A1- 2 552 672
- CN-A- 101 815 602
- DE-A1- 3 338 493
- FR-A- 1 582 148
- JP-A- H0 610 260
- JP-A- S48 103 846
- JP-A- 2003 301 340
- JP-A- 2003 301 340
- JP-A- 2008 221 724
- US-A- 3 306 020
- US-A- 4 803 762
- US-A- 5 479 769

## Description

### Technical Field of the present invention

The present disclosure relates to the technical field of the production of glass fibers, and in particular to a method for knotting glass fiber bundles and a spliced glass fiber bundle.

### Background of the present invention

Generally, glass fiber is a material consisting of lots of (usually, hundreds of, thousands of or more) fine glass fibers used together. The diameter of a single fiber is about 10 µm. Since the glass fiber is a brittle material having a high strength but a low folding resistance and a low abrasion resistance, many individual fibers will often be abraded (resulting in fuzzes) during the processing steps, or many fibers are inconsistent in length (causing lugs in assembled fibers), so that the strength or quality of a glass fiber bundle containing a plurality of individual fibers is reduced. Therefore, during the production, such fiber segments often need to be removed, and the remaining qualified fibers need to be knotted and connected, so that two fiber bundles are connected to form a longer fiber bundle for further use.

Common methods for knotting glass fiber bundles include: knotting by twining, knotting by glue and knotting by air mixing. The knotting by twining means that two glass fiber bundles are connected by knotting like two ropes or two threads connected. However, the formed knot is large in size, so it is disadvantageous for the further use of fibers. The knotting by glue means that two glass fiber bundles are connected by an adhesive such as glue. In this method, the formed knot is relatively small in size and relatively high in strength. However, since a small amount of other matters such as glue will be introduced into the glass fibers during gluing, the quality of products is influenced adversely. The knotting by air mixing means that individual fibers in two fiber bundles are bent and twined with each other by swelling entanglement of compressed air, so as to connect the two glass fiber bundles. In this method, although there are no other pollutants in the knotted fiber bundle, the formed knot is relatively large in size and modest in strength. The above methods may be used as methods for knotting the whole bundle, and their most obvious disadvantage is that the formed knot is relatively large in size and will influence the subsequent operation and the quality of products.

On one hand, when the knot of fiber bundles is large in size, it is difficult to pass the fiber bundles through components such as ceramic eyelets, fiber guide tubes or cutting guns during the subsequent applications of the fiber bundles, and the glass fiber bundles may get stuck or may even break when getting stuck, resulting in the suspension of production. Consequently, both the production efficiency and the product quality are influenced. Even if the glass fiber bundles may not break, more fuzzes will be caused due to the abrasion to the knot, so that the operating environment and the product quality are influenced. On the other hand, a too large knot will slow down the impregnation of glass fiber bundles with resin or cause the glass fiber bundles to be not completely saturated with resin. As a result, white defective blocks are generated in related products, and the appearance and utilization strength of the products are influenced.

In addition, during the knotting process by the above knotting methods, particularly when glass fiber bundles are thick, for example, when the linear density of the fiber bundles exceeds 1000tex, the glass fiber bundle as a whole is thicker and harder, and it is difficult to knot two glass fiber bundles together by any one of the above methods. It is difficult to perform the knotting operation. Moreover, it is possible that some fibers in the bundles are not included in the knot, resulting in long escaped fibers (fibers escaped from the whole bundles). During the production and application, the escaped fibers are easily wound on a device, so that the production process and product quality are influenced, and the service life of the device is also influenced.

JP H06 10260 A discloses a method for knotting glass fiber bundles according to the preamble of claim 1 and a spliced glass fiber bundle according to the preamble of claim 3.

### Summary of the present invention

In view of the above problems, an objective of the present disclosure is to provide a method for knotting glass fiber bundles and a spliced glass fiber bundle in order to solve any one of the above problems. This objective is achieved by a method according to claim 1 and a spliced glass fiber bundle according to claim 3.

The present disclosure provides a method for knotting glass fiber bundles, including the following steps of:
equally dividing a glass fiber bundle A and a glass fiber bundle B that are to be connected by knotting into n strands, respectively, and marking the strands as A1-An and B1-Bn, respectively, wherein n is a natural number greater than or equal to 2; and
successively knotting and splicing the glass fiber strands A1-An and the glass fiber strands B1-Bn in one-to-one correspondence to form n spliced knots.

The n spliced knots are staggered in pairs in a lengthwise direction of the glass fiber bundles.

A distance L between two adjacent spliced knots among the n spliced knots in the lengthwise direction of the glass fiber bundles is greater than or equal to a length C of the spliced knots.

The n spliced knots are formed in any one or more of the following ways: knotting by twining, knotting by glue and knotting by air mixing.

The present disclosure further provides a spliced glass fiber bundle, wherein the spliced glass fiber bundle includes a glass fiber bundle A and a glass fiber bundle B that are spliced with each other, and the glass fiber bundle A and the glass fiber bundle B are connected by n spliced knots, where n is a natural number greater than or equal to 2.

The n spliced knots are the same in size and staggered in pairs in a lengthwise direction of the spliced glass fiber bundle.

A distance L between two adjacent spliced knots among the n spliced knots in the lengthwise direction of the spliced glass fiber bundle is greater than or equal to a length C of the spliced knots.

The n spliced knots are formed in any one or more of the following ways: knotting by twining, knotting by glue and knotting by air mixing.

The present disclosure has the following beneficial effects:
firstly, in the present disclosure, by equally dividing ends of two glass fiber bundles and then splicing the two glass fiber bundles in a staggered knotting manner, the spliced strength of the fiber bundles is ensured, the size and the diameter of the spliced knots are effectively reduced, and it is easier to pass the spliced knots of the glass fiber bundles through a fiber guide device;
secondly, since the knots of the glass fiber bundles spliced by the method for knotting glass fiber bundles in the present disclosure are small, the smooth production can be ensured, and it is advantageous for continuous production and quality of subsequent products; and
thirdly, the method for knotting glass fibers in the present disclosure is simple, easy to operate and applied to the knotting and splicing of various fiber bundles.

### Brief Description of the Drawings

The drawings incorporated in the description and constituting a part of the description show the embodiments of the present disclosure, and are used for explaining the principle of the present disclosure in combination with the description. In these drawings, similar reference numerals represent similar elements. The drawings described hereinafter are some of but not all of the embodiments of the present disclosure. A person of ordinary skill in the art can obtain other drawings according to these drawings without paying any creative effort.
Fig. 1 is a schematic structure diagram of an embodiment of glass fiber bundles connected by a method for knotting glass fiber bundles according to the present disclosure;
Fig. 2 is a schematic structure diagram of glass fiber bundles connected by conventional knotting by twining;
Fig. 3 is a schematic structure diagram of glass fiber bundles connected by conventional knotting by glue;
Fig. 4 is a schematic structure diagram of an embodiment of a glass fiber bundle according to the present disclosure; and
Fig. 5 is a schematic structure diagram of another embodiment of the glass fiber bundle according to the present disclosure.

### Detailed Description of the present invention

To make the objectives, technical solutions and advantages of the embodiments of the present disclosure clearer, the technical solutions in the embodiments of the present disclosure will be described below clearly and completely with reference to the accompanying drawings in the embodiments of the present disclosure. Apparently, the described embodiments are just some but not all of the embodiments of the present disclosure.

In the present disclosure, by equally dividing ends of two glass fiber bundles into a plurality of sub-bundles, then knotting and connecting the sub-bundles, by staggering the spliced knots of the fiber bundles in pairs, in this way the diameter of the spliced knots is reduced, and the fiber bundles will not be stuck, broken or excessively abraded to cause fuzzes when passing through a fiber guide device, for example, a ceramic eyelet, at a high speed. Moreover, during chopping, the quality problem caused when the spliced knots are not chopped due to their too large sizes and too high hardness can be avoided, and the probability of defects due to imperfect impregnation of too large spliced knots in glass fiber reinforced products can also be reduced.

Firstly, the present disclosure provides a method for knotting glass fiber bundles, including the following steps of:
equally dividing a glass fiber bundle A and a glass fiber bundle B that are to be connected by knotting into n strands, respectively, and marking the strands as A1-An and B1-Bn, respectively, where n is a natural number greater than or equal to 2; and
successively knotting and splicing the glass fiber strands A1-An and the glass fiber strands B1-Bn in one-to-one correspondence to form n spliced knots.

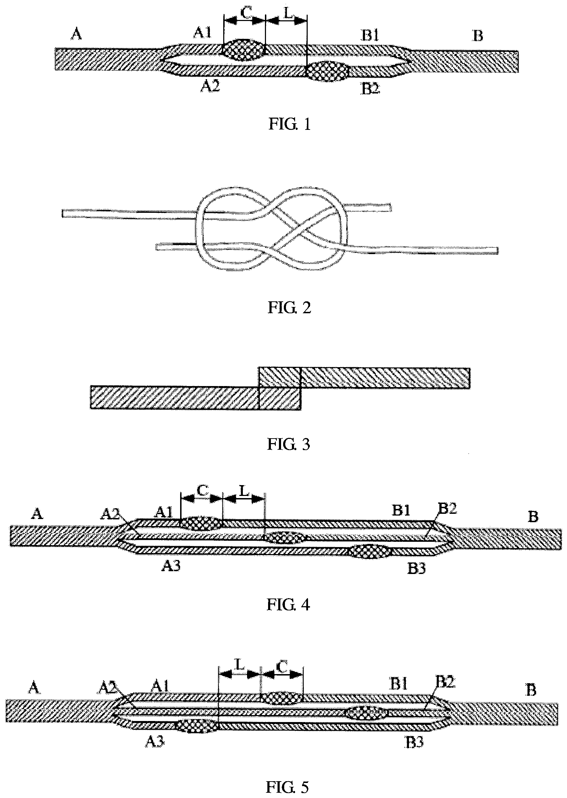

Fig. 1 shows a schematic structure diagram of glass fiber bundles connected by the method for knotting glass fiber bundles according to the present disclosure. As shown in Fig. 1, n spliced knots are staggered in pairs along a lengthwise direction of the glass fiber bundles, and any two spliced knots are prevented from paralleling or overlapping with each other, so that the purpose of reducing the width or diameter of the spliced knots is realized. Further, in order to avoid the overlapping of any two spliced knots, in the lengthwise direction of the glass fiber bundles, a certain distance L is kept between adjacent spliced knots. According to the invention, the distance between two adjacent spliced knots is set to 3 cm, 5 cm or 10 cm. This specific value can be selectively set depending on the diameter of the glass fiber bundles, the size of the spliced knots and other factors. According to the invention, the distance L between two adjacent spliced knots among the n spliced knots in the lengthwise direction of the glass fiber bundles is greater than or equal to the length C of the spliced knots.

Specifically, the n spliced knots can be formed in any one or more of the following ways: knotting by twining, knotting by glue and knotting by air mixing. The specific way of forming the spliced knots has been known in the prior art and will be not described in detail here.

Compared with the conventional knotting or glue splicing of the whole glass fiber bundle, if two glass fiber bundles are spliced by the method for knotting glass fiber bundles in the present disclosure, the sectional area of the spliced knots is reduced significantly. Fig. 2 shows a schematic structure diagram of glass fiber bundles spliced by conventional knotting by twining, and Fig. 3 shows a schematic structure diagram of glass fiber bundles connected by conventional splicing by glue. If the sectional area of the whole glass fiber bundle (i.e., the sum of sectional areas of all individual fibers in the whole glass fiber bundle) is S, by the knotting method shown in Fig. 2, the sectional area of the knots is 4S; by the splicing method by glue shown in Fig. 3, due to the use of an adhesive, the sectional area of the knot is greater than 2S; and, if the glass fiber bundles are spliced by the knotting method of the present disclosure, the sectional area of each equally divided fiber bundle is S/n, and the sectional area of the knots is (4S/n)+(n-1)*S/n=3S/n+S.

If the glass fiber bundles are equally divided into 2 strands, as shown in Fig. 1, the glass fiber bundle A is divided into sub-bundles A1 and A2, and the glass fiber bundle B is divided into sub-bundles B1 and B2, the total sectional area after splicing is 3S/2+S=2.5S. After the whole glass fiber bundle is divided into two strands which are then spliced, the sectional area is (4S-2.5S)/(4S)=37.5% less than the sectional area formed by the conventional bundle knotting and splicing. If the glass fiber bundle is equally divided into 3 strands, the total sectional area after splicing is 3S/3+S=2S, and the sectional area is (4S-2S)/(4S)=50% less than the sectional area formed by the conventional bundle knotting and splicing. If the glass fiber bundle is equally divided into 4 strands, the total sectional area after splicing is 3S/4+S=1.75S, and the sectional area is (4S-1.75S)/(4S)=56.25% less than the sectional area formed by the conventional bundle knotting and splicing.

In conclusion, when two glass fiber bundles are spliced by the method for knotting glass fiber bundles in the present disclosure, the spliced knots of each strand are staggered with each other, so that the total sectional area of the formed knots is obviously less than the sectional area of the knots formed by the conventional splicing method. Accordingly, it is smoother to use the spliced glass fiber bundle and easier to cut the spliced glass fiber bundle off during using, and the quality of the produced products is also improved greatly.

Corresponding to the method for knotting glass fiber bundles, the present disclosure further provides a spliced glass fiber bundle. Fig. 4 shows a schematic structure diagram of an embodiment of the spliced glass fiber bundle, and Fig. 5 shows a schematic structure diagram of another embodiment of the spliced glass fiber bundle. With reference to Figs. 4 and 5, the spliced glass fiber bundle includes a glass fiber bundle A and a glass fiber bundle B that are spliced with each other. Ends of the glass fiber bundle A and the glass fiber bundle B are equally divided into n strands, and the glass fiber bundle A and the glass fiber bundle B are connected by n spliced knots, where n is a natural number greater than or equal to 2.

Specifically, the n spliced knots are the same in size and staggered in pairs in a lengthwise direction of the spliced glass fiber bundle. That is, any two spliced knots will not be overlapped with each other, so that the sectional area or diameter of the spliced glass fiber bundle at the spliced knots is minimized. Exemplarily, as shown in Figs. 4 and 5, the glass fiber bundle A is divided into sub-bundles A1, A2 and A3, and the glass fiber bundle B is divided into sub-bundles B1, B2 and B3. In an embodiment shown in Fig. 4, three spliced knots are successively arranged at intervals; however, in an embodiment shown in Fig. 5, three spliced knots are arranged in random order, and there is still a certain distance L between two adjacent spliced knots in the lengthwise direction of the glass fiber bundle. However, in order to reduce the length of the spliced knots of the glass fiber bundle A and the glass fiber bundle B as far as possible, the distance L should not be too large, as long as it is ensured that any two sliced knots will not be overlapped with each other.

In a typical embodiment, the distance L between two adjacent spliced knots among the n spliced knots in the lengthwise direction of the spliced glass fiber bundle is greater than or equal to the length C of each spliced knot.

It is to be noted that the n spliced knots are formed in any one or more of the following ways: knotting by twining, knotting by glue and knotting by air mixing.

The contents described above can be implemented separately or jointly in various ways, and these transformations shall fall into the protection scope of the present disclosure.

It is to be noted that, as used herein, the term " comprise/comprising " , "contain/containing" or any other variants thereof is non-exclusive, so that an object or a device containing a series of elements contains not only these elements, but also other elements not listed clearly, or further contains inherent elements of the object or device. Unless otherwise defined herein, an element defined by the statement "comprises/comprising an/a···" does not exclude other identical elements in the object or device including this element.

The foregoing embodiments are merely used for describing the technical solutions of the present disclosure, and the present disclosure has been described in detail just by preferred embodiments. It should be understood by a person of ordinary skill in the art that modifications or equivalent replacements can be made to the technical features of the present disclosure without departing from the scope defined by the appended claims of the present disclosure.

### INDUSTRIAL APPLICABILITY

In the present disclosure, by equally dividing ends of two glass fiber bundles into a plurality of sub-bundles, then knotting and connecting the sub-bundles, by staggering the spliced knots of the fiber bundles in pairs, in this way the diameter of the spliced knots is reduced, and the fiber bundles will not be stuck, broken or excessively abraded to cause fuzzes when passing through a fiber guide device, for example, a ceramic eyelet, at a high speed. Moreover, during chopping, the quality problem caused when the spliced knots are not chopped due to their too large size and too high hardness can be avoided, and the probability of defects due to imperfect impregnation of too large spliced knots in glass fiber reinforced products can also be reduced.

## Claims

1. A method for knotting glass fiber bundles, comprising the following steps of:
equally dividing a glass fiber bundle A and a glass fiber bundle B that are to be connected by knotting into n strands, respectively, and marking the strands as A1-An and B1-Bn, respectively, wherein n is a natural number greater than or equal to 2; and
successively knotting and splicing the glass fiber strands A1-An and the glass fiber strands B1-Bn in one-to-one correspondence to form n spliced knots;
**characterized in that**:
the n spliced knots are staggered in pairs in a lengthwise direction of the glass fiber bundles;
a distance L between two adjacent spliced knots among the n spliced knots in the lengthwise direction of the glass fiber bundles is greater than or equal to a length C of the spliced knots,
wherein L is set to 3 cm, 5 cm or 10 cm;
wherein:
the sectional area of the whole glass fiber bundle is S, the sectional area of each equally divided fiber bundle is S/n, and the sectional area of the knots is (4S/n)+(n-1)*S/n=3S/n+S.

2. The method for knotting glass fiber bundles according to claim 1, wherein:
the n spliced knots are formed in any one or more of the following ways: knotting by twining, knotting by glue and knotting by air mixing.

3. A spliced glass fiber bundle, wherein:
the spliced glass fiber bundle comprises a glass fiber bundle A and a glass fiber bundle B that are spliced with each other, and the glass fiber bundle A and the glass fiber bundle B are connected by n spliced knots, where n is a natural number greater than or equal to 2; **characterized in that**
the n spliced knots are the same in size and staggered in pairs in a lengthwise direction of the spliced glass fiber bundle;
a distance L between two adjacent spliced knots among the n spliced knots in the lengthwise direction of the spliced glass fiber bundle is greater than or equal to a length C of the spliced knots,
wherein L is set to 3 cm, 5 cm or 10 cm;
wherein:
the sectional area of the whole glass fiber bundle is S, the sectional area of each equally divided fiber bundle is S/n, and the sectional area of the knots is (4S/n)+(n-1)*S/n=3S/n+S.

4. The spliced glass fiber bundle according to claim 3, wherein:
the n spliced knots are formed in any one or more of the following ways: knotting by twining, knotting by glue and knotting by air mixing.

## Patentansprüche

1. Verfahren zum Verknoten von Glasfaserbündeln, umfassend die folgenden Schritte:
gleichmäßiges Aufteilen eines Glasfaserbündels A und eines Glasfaserbündels B, die durch Verknoten miteinander verbunden werden sollen, in jeweils n Stränge und Markieren der Stränge als A1 bis An und B1 bis Bn, wobei n eine natürliche Zahl größer oder gleich 2 ist; und
nacheinander Verknoten und Verbinden der Glasfaserstränge A1 bis An und der Glasfaserstränge B1 bis Bn in Eins-zu-eins-Entsprechung unter Bildung von n gespleißten Knoten;
**dadurch gekennzeichnet, dass**:
die n gespleißten Knoten in Längsrichtung der Glasfaserbündel paarweise gestaffelt sind;
der Abstand L zwischen zwei benachbarten gespleißten Knoten unter den n gespleißten Knoten in Längsrichtung der Glasfaserbündel größer oder gleich der Länge C der gespleißten Knoten ist,
wobei L auf 3 cm, 5 cm oder 10 cm festgelegt wird;
wobei:
die Querschnittsfläche des gesamten Glasfaserbündels S beträgt, die Querschnittsfläche jedes bei der gleichmäßigen Aufteilung entstandenen Faserbündels S/n beträgt und die Querschnittsfläche der Knoten (4S/n)+(n-1)*S/n = 3S/n+S beträgt.

2. Verfahren zum Verknoten von Glasfaserbündeln gemäß Anspruch 1, wobei:
die n gespleißten Knoten nach einer oder mehreren der folgenden Methoden gebildet sind: Verknoten durch Verzwirnen, Verknoten durch Leim und Verknoten durch Luftverwirbelung.

3. Gespleißtes Glasfaserbündel, wobei:
das gespleißte Glasfaserbündel ein Glasfaserbündel A und ein Glasfaserbündel B umfasst, die miteinander verspleißt sind, und das Glasfaserbündel A und das Glasfaserbündel B durch n gespleißte Knoten miteinander verbunden sind, wobei n eine natürliche Zahl größer oder gleich 2 ist;
**dadurch gekennzeichnet, dass**
die n gespleißten Knoten dieselbe Größe aufweisen und in Längsrichtung des gespleißten Glasfaserbündels paarweise gestaffelt sind;
der Abstand L zwischen zwei benachbarten gespleißten Knoten unter den n gespleißten Knoten in Längsrichtung des gespleißten Glasfaserbündels größer oder gleich der Länge C der gespleißten Knoten ist,
wobei L auf 3 cm, 5 cm oder 10 cm festgelegt wird;
wobei:
die Querschnittsfläche des gesamten Glasfaserbündels 5 beträgt, die Querschnittsfläche jedes bei der gleichmäßigen Aufteilung entstandenen Faserbündels S/n beträgt und die Querschnittsfläche der Knoten (4S/n)+(n-1)*S/n = 3S/n+S beträgt.

4. Gespleißtes Glasfaserbündel gemäß Anspruch 3, wobei:
die n gespleißten Knoten nach einer oder mehreren der folgenden Methoden gebildet sind: Verknoten durch Verzwirnen, Verknoten durch Leim und Verknoten durch Luftverwirbelung.

## Revendications

1. Procédé pour nouer des faisceaux de fibres de verre, comprenant les étapes suivantes consistant à :
diviser à parts égales un faisceau de fibres de verre A et un faisceau de fibres de verre B, qui doivent être reliés, en les nouant dans n fils, respectivement, et marquer les fils A1 à An et B1 à Bn, respectivement, dans lequel n est un nombre naturel supérieur ou égal à 2, et
successivement nouer et épisser les fils de fibres de verre A1 à An et les fils de fibres de verre B1 à Bn dans une correspondance univoque pour former n noeuds épissés,
**caractérisé en ce que**
lesdits n noeuds épissés sont échelonnés par paire dans une direction longitudinale des faisceaux de fibres de verre,
la distance L entre deux noeuds épissés adjacents parmi les n noeuds épissés dans la direction longitudinale des faisceaux de fibres de verre est supérieure ou égale à la longueur C des noeuds épissés,
dans lequel L est fixé à 3 cm, 5 cm ou 10 cm,
dans lequel
la section transversale du faisceau de fibres de verre entier est S, la section transversale de chaque faisceau de fibres divisé à parts égales est S/n, et la section transversale des noeuds est (4S/n)+(n-1)*S/n = 3S/n+S.

2. Procédé pour nouer des faisceaux de fibres de verre selon la revendication 1, dans lequel
les n noeuds épissés sont formés selon l'une ou plusieurs des manières suivantes : nouer en tordant, nouer par colle, et nouer par tourbillonnement d'air.

3. Faisceau de fibres de verre épissé, dans lequel
ledit faisceau de fibres de verre épissé comprend un faisceau de fibres de verre A et un faisceau de fibres de verre B, qui sont épissés les uns aux autres, et ledit faisceau de fibres de verre A et ledit faisceau de fibres de verre B sont reliés par n noeuds épissés, dans lequel n est un nombre naturel supérieur ou égal à 2,
**caractérisé en ce que**
lesdits n noeuds épissés ont la même taille et sont échelonnés par paire dans une direction longitudinale du faisceau de fibres de verre épissé,
la distance L entre deux noeuds épissés adjacents parmi les n noeuds épissés dans la direction longitudinale du faisceau de fibres de verre est supérieure ou égale à la longueur C des noeuds épissés,
dans lequel L est fixé à 3 cm, 5 cm ou 10 cm,
dans lequel
la section transversale du faisceau de fibres de verre entier est S, la section transversale de chaque faisceau de fibres divisé à parts égales est S/n, et la section transversale des noeuds est (4S/n)+(n-1)*S/n = 3S/n+S.

4. Faisceau de fibres de verre épissé selon la revendication 3, dans lequel
les n noeuds épissés sont formés selon l'une ou plusieurs des manières suivantes : nouer en tordant, nouer par colle, et nouer par tourbillonnement d'air.
